(19) Europäisches Patentamt
European Patent Office
Office européen des brevets

(11) **EP 3 812 224 B1**

(12) **EUROPEAN PATENT SPECIFICATION**

(45) Date of publication and mention
of the grant of the patent:
**21.09.2022 Bulletin 2022/38**

(21) Application number: **19205103.5**

(22) Date of filing: **24.10.2019**

(51) International Patent Classification (IPC):
**B60T 8/1766** *(2006.01)* **B60T 8/17** *(2006.01)*
**B60T 8/18** *(2006.01)*

(52) Cooperative Patent Classification (CPC):
**B60T 8/1766; B60T 8/1708; B60T 8/1887**

(54) **METHOD OF MULTI-ASPECT AXLE BRAKE FORCE DISTRIBUTION ON COMMERCIAL TOWING VEHICLES WITH ELECTRONICALLY CONTROLLED BRAKE SYSTEM**

VERFAHREN ZUR MEHRSEITIGEN ACHSBREMSKRAFTVERTEILUNG AN NUTZFAHRZEUGEN MIT EINEM ELEKTRONISCH GESTEUERTEN BREMSSYSTEM

PROCÉDÉ DE DISTRIBUTION DE FORCE DE FREINAGE D'ESSIEU À PLUSIEURS ASPECTS SUR DES VÉHICULES DE REMORQUAGE COMMERCIAUX AYANT UN SYSTÈME DE FREINAGE À COMMANDE ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.04.2021 Bulletin 2021/17**

(73) Proprietor: **KNORR-BREMSE Systeme für Nutzfahrzeuge GmbH**
**80809 München (DE)**

(72) Inventor: **CSERHALMI, György**
**1212 Budapest (HU)**

(56) References cited:
**CN-B- 103 991 384      JP-A- 2012 010 505**
**US-A1- 2018 072 290      US-A1- 2018 304 871**

**Description**

The present application deals with a method for improving the axle brake force distribution, this method being used by electronically controlled brake systems, in particular for towing vehicles.

In the state of the art, the distribution of axle brake forces is for example based on wheel slip differences or on measured and/or estimated axle loads. Both options tend to equalize adhesion utilization of the axles and are hence mainly used in situations when the stability has a high importance.

For example, US 2018170330 A1 discloses a method for electronically regulating the brake force distribution in a pressure medium-operated brake system of a vehicle having at least one front axle brake circuit, associated with a front axle, and at least one rear axle brake circuit, associated with at least one rear axle. When the brake system is operated, a rear axle brake pressure, acting in the at least one rear axle brake circuit, is regulated to prevent locking of the rear wheels before locking of the front wheels, and in which the brake pressure at the rear axle is limited only while a pressure value which acts in the rear axle brake circuit is below a prespecified pressure threshold value, but the brake pressure at the rear axle is not limited if the pressure value acting in the rear axle brake circuit is not less than the prespecified pressure threshold value. JP2012010505 discloses a train controller for constantly generating a torque near an adhesion limit value and effectively utilizing an adhesion force in the entire train organization.

Another possibility is a lining wear-optimized distribution, being used to balance brake lining thickness.

Due to the growing number and improving quality of information such a brake system receives from the vehicle network and from its own sensors, different situations need to be evaluated with increasing accuracy. There is a strong demand to adapt the brake force distribution to different situations, and a brake force distribution also has to be adapted to a variety of situations in order to operate the vehicle safely and economically.

A technical problem of the present application is hence to provide an improved method for a brake force distribution, which is able to quickly and stably adapt to different situations, e.g. an emergency braking, wear of brake pads, temperature of brake pads or the like.

This technical problem is solved by a method according to claim 1 and a brake control device according to claim 14 and a computer program 15. Further advantageous embodiments are subject-matter of the dependent claims.

A method according to the present application is adapted to control a brake force distribution of a vehicle comprising at least two axles, wherein the total brake force to be applied in order to reach a certain retardation of the vehicle is distributed to the axles of the vehicle.

This method comprising the following steps:

a) defining one or more brake patterns (a brake pattern is the optimal brake force distribution for exclusively one aspect like lining wear), wherein the brake patterns are vectors with an entry for each axle;
b) calculation of one pattern weight for each brake pattern based on at least one input value,
c) calculation of a weight distribution for the brake force of each axle;
d) calculation of a brake force for each axle.

A brake pattern is a definition of the state of the brakes of different axles. For example, if a temperature of one brake pad of one axle exceeds a certain threshold value, the brake force for this axle needs to be reduced to a minimum value in order to enable a cooling of this respective brake pad. Hence, in a certain situation, i.e. brake pattern, the brake force of one specific axle will be reduced to a minimum value. As a result, the brake forces applied to other axles need to increase in order to obtain a desired retardation of a vehicle.

A pattern weight is a factor that determines to which extent a certain brake pattern will be adopted by the whole brake system. For example, the temperature of one brake pad of one axle exceeds a certain threshold value, and the brake lining thickness of the brake of another axle is below a certain threshold value. Then, a compromise has to be found, i.e. calculated. Both brake patterns then are to be considered, with a certain weight factor.

A brake force distribution method is defined considering multiple patterns depending on the actual status of the vehicle and its environment. Indicators like disk temperature, wheel slip, pad wear, axle load and additional driveline torque can be considered together with a smooth transition between the states.

The method implementation tends to be the general brake software component configurable to fit all vehicle manufacturer preferences.

Preferably, the at least two brake patterns describe states of the vehicle and its environment. These can be pre-defined.

Preferably, the method considers all brake patterns according to their respective pattern weight, which is calculated with the method according to the present application.

According to a further preferred embodiment, a hierarchical order between the at least two brake patterns is set for calculating the pattern weight, whereby at least one brake pattern can be prioritized. For example, a brake pattern for an emergency braking can have priority over all other brake patterns.

According to a further preferred embodiment, a prioritization can be performed based on a situation analysis of the brake system.

Preferably, the pattern weight is calculated based on vehicle sensor data. Hence, e.g. the brake pad temperature of one axle or the lining thickness of the brake of another axle can be used as input values.

According to a further preferred embodiment, the minimum percentage of the total brake force can be set depending on the actual number of controlled axles. Hence, it can be avoided that an axle is not braked at all.

According to a further preferred embodiment, at least one brake pattern of the at least two brake patterns can be disregarded, in particular by setting its respective pattern weight to zero. This is for example used if the balancing of wear or temperature is not possible or not necessary for any of the axles.

According to a further preferred embodiment, at least one axle can be permanently or temporarily disregarded, in particular by setting the entry / entries for the respective axle(s) in the one or more brake patterns to the average of all remaining axles. This can be used if input to calculate the specific brake pattern is not available for certain axles. More preferred, the input for calculation of the corresponding pattern for the disregarded axle(s) lies outside a predefined range around the average of all other non-excluded values.

According to a further preferred embodiment, at least one axle can be permanently or temporarily disregarded as in the previous point if the corresponding inputs of pattern calculation for the axle(s) lie outside a predefined range around the average of all other non-excluded values. Thereby, it is possible to avoid strongly deviating input signals which would hinder an effective distribution for the remaining axles

According to a more preferred embodiment, at least one brake pattern of the at least two brake patterns which belongs to a certain axle can be disregarded.

According to a further preferred embodiment, at least one axle can be permanently or temporarily disregarded, in particular by setting the entry / entries for the respective axle(s) in all brake patterns to zero. This can be used if certain axles are lifted, being the reason why braking or controlling these axles would have no effect.

According to a further preferred embodiment, it can be set that the brake force of at least two axles are identical if the brakes of said axles are commonly controlled, e.g. are connected to the same pressure channel in a pneumatic brake system. This is necessary because different brake forces can't be realized on the axles of such axle groups.

According to a further preferred embodiment, the mean value of the calculated brake forces of the at least two axles is used.

According to a further preferred embodiment, if at least one axle is inactive, in particular lifted, among a group of axles, the mean value of the remaining axles is set for these at least one inactive axle.

In the following, a preferred embodiment of the present application is described with the enclosed Figure and the following equations.

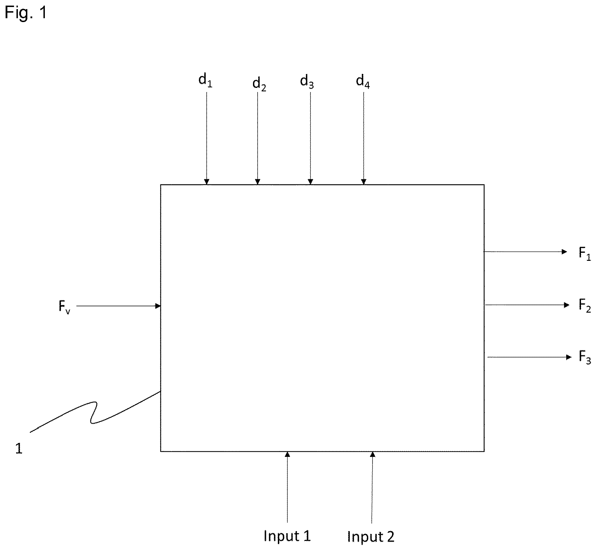

Fig. 1 shows a brake control device 1 with several inputs and outputs.

The total brake force $F_v$ that is required for a certain retardation of the vehicle is fed into the brake control device 1. Furthermore, four different brake patterns $d_1$, $d_2$, $d_3$ and $d_4$ are retrieved by the brake control device 1. Alternatively, these brake patterns $d_1$, $d_2$, $d_3$ and $d_4$ may be stored in the brake control device 1. Furthermore, two input values of certain parameters, Input 1 and Input 2, are input into the brake control device 1. These values could for example be read out of two different sensors, i.e. a temperature sensor of a certain brake for one axle or a lining thickness sensor for another brake for an axle.

The brake control device 1 outputs three brake forces $F_1$, $F_2$ and $F_3$, one for each axle.

In the following, the theoretical background of the calculation of the brake forces for the axles are described in general.

Equations 1, 2a and 2b are generally used to calculate the vector of brake forces on the axles of a vehicle:

$$\underline{F} = F_v \cdot \underline{w} \tag{1}$$

$$\underline{F} = F_v \cdot \left( \underline{\underline{D}} \cdot \underline{a} \right) \tag{2a}$$

or in a matrix representation

$$\underline{F} = F_v \cdot \left( [\underline{d_1} \quad \cdots \quad \underline{d_A}] \cdot \begin{bmatrix} a_1 \\ \vdots \\ a_A \end{bmatrix} \right) = F_v \cdot \left( \begin{bmatrix} d_{11} & \cdots & d_{A1} \\ \vdots & \ddots & \vdots \\ d_{1N} & \cdots & d_{AN} \end{bmatrix} \cdot \begin{bmatrix} a_1 \\ \vdots \\ a_A \end{bmatrix} \right) = \tag{2b}$$

$$= F_v \cdot \begin{bmatrix} d_{11} a_1 + d_{21} a_2 + \cdots + d_{A1} a_A \\ \vdots \\ d_{1N} a_1 + d_{2N} a_2 + \cdots + d_{AN} a_A \end{bmatrix}$$

wherein $F_v$ is the total brake force to be applied on the vehicle for a certain braking effect, $\underline{w}$ is the weight vector with the proportions for the total brake force, $N$ is the maximum number of axles of a vehicle, $A$ is the number of brake patterns to be considered by the distribution algorithm, **D** is a $N \times A$ matrix of brake force distribution (each column is for a separate brake pattern), and $\underline{\alpha}$ is the vector of weights for different brake patterns.

Herein, elements of weight vector $\underline{\alpha}$ and also elements of $\underline{d}$ column vectors of the matrix **D** must sum up to one. This results that the sum elements of $\underline{w}$ must also be one, assuring that the sum of elements of $\underline{F}$ results in the total brake force $F_v$ :

$$\sum_{k=1}^{N} F_k = \sum_{k=1}^{N} F_v \cdot w_k = F_v \cdot \sum_{k=1}^{N} w_k = F_v \tag{3a}$$

$$\sum_{i=1}^{N} d_{ji} = 1 \, ; j = 1..A \tag{3b}$$

$$\sum_{i=1}^{A} a_i = 1 \tag{3c}$$

$$\sum_{k=1}^{N} w_k = \begin{matrix} d_{11} a_1 + d_{21} a_2 + \cdots + d_{A1} a_A + \\ d_{12} a_1 + d_{22} a_2 + \cdots + d_{A2} a_A + \\ \vdots \\ + d_{1N} a_1 + d_{2N} a_2 + \cdots + d_{AN} a_A \end{matrix} \tag{3d}$$

$$= a_1 \sum_{i=1}^{N} d_{1i} + a_2 \sum_{i=1}^{N} d_{2i} + \cdots + a_A \sum_{i=1}^{N} d_{Ai} = \sum_{j=1}^{A} a_j = 1$$

Examples for brake pattern column vectors can be axle load based variants, lining wear-based variants and brake temperature optimized variants. The matrix $\underline{D}$ generally gives a weight to all three types, considering all of them in the final distribution together. However, it is also possible to skip one or more type(s) completely.

The importance of a single brake pattern is defined according to its inputs and parameters needed for a certain aspect. For example, if the temperature of a brake device or brake system exceeds a certain threshold value, the temperature-based brake pattern of one specific axle has the highest relevance. However, if in the same time an emergency braking becomes necessary which requests a very different brake force pattern, equation (1) prevents a single brake pattern to become dominant, i.e. taking full control. Hence, a hierarchical order between the brake patterns is defined according to the present invention.

According to the present invention, a hierarchical order between the aspects may be organized in a binary tree, distinguishing between child patterns and parent patterns (cf. Table 1).

(Table 1)

| 1 | | | | | |
|---|---|---|---|---|---|
| $S^*_0$ | | $R_0$ | | | |
| | | | $R_1$ | | |
| | | | | $R_2$ | |
| $S^*_1$ | $R^*_1$ | $S_1$ | $S_2$ | $S_3$ | $R_3$ |

Herein, all child pattern pairs are derived from a parent pattern, divided into a significant part $S$ and a remaining part $R$ of the parent pattern. The parent pattern is hence a sum of the significant part $S$ and a remaining part $R$ of the parent pattern:

$$S_n = S_{n+1} + R_{n+1} \tag{4}$$

With factors this can be written with simplified indexing for one path as

$$S_{n+1} = f_{n+1} \cdot S_n \tag{5a}$$

$$R_{n+1} = (1 - f_{n+1}) \cdot S_n \tag{5b}$$

$$S_{n+2} = f_{n+2} \cdot S_{n+1} = f_{n+2} \cdot f_{n+1} \cdot S_n \tag{5c}$$

$$S_{n+k} = f_{n+k} \cdot f_{n+k-1} \cdot \cdots \cdot f_{n+1} \cdot S_n \tag{5d}$$

$$S_{n+k} = a_{n+k} \cdot S_n \tag{5e}$$

The weight of a brake pattern as a proportion of the topmost pattern can be calculated as the product of factors on their path. The topmost aspect sums up from the lowest level leafs of the tree because of the recursive splitting they are created with. A leaf means a brake force distribution weight being optimal from a different point of view.

The significant leaf has its own factor $f_n$ within its parent leaf and can suppress its sibling. This factor can be manipulated in function of the result of the situation analysis. In the end, all aspects will be weighted with their accumulated $a$ factor. The column vector $\underline{\alpha}$ of these factors lists the importance of each brake pattern considered by the brake force distribution. Increasing an element of the brake pattern vector results in an amplified role of the corresponding distribution vector.

In the next step, the weight column vectors of the brake force ratio are arranged in a matrix $\underline{D}$. Each element of the weight column vectors belongs to a specific axle in the geometrical order.

The higher a vector element is, the more brake force will be received by the respective axle. A separate control algorithm can be applied to all column vectors that tend to reduce the corresponding error value.

A possible way to distribute brake forces proportional with a series of values for the axles is the following: For a specific distribution, one individual input value is used, wherein said input value can be different for all axles. For example, input value can range from zero to hundred percent. Then, the distribution factors for each axle are set to the same ratio as the ratio of these percentage values.

The brake pattern weight depends on the difference between the maximum and minimum percentages.

More sophisticated control algorithms can also be used to calculate parameters.

For all control algorithms, there is a limit at which the control algorithm has to be quit in order to avoid extreme intervention which would have no effective result. Preferably, the deviation of the controlled parameter should be monitored from the average of the same parameters of other controlled axles. If this deviation exceeds a specific threshold, the distribution might be quit for the specific axle. This action must be repeated for the remaining axles.

This is based on the following principle: It is possible that not all axles of a vehicle should be controlled, or that they are indifferent for a particular aspect. Example for axles not to be controlled is a case where the balancing of e.g. wear or temperature on a brake installation is not possible, hence the respective brake pattern must not be regarded.

In a preferred embodiment of the present invention, an embedded microcontroller environment, elements like vectors or matrices of variable size are not preferred due to dynamic heap allocation, because this would lead to unpredictable RAM consumption. Hence, the size of the vectors and matrices is preferably not changed during runtime. However, the content of these vectors or matrices must be variable, so that all potential brake pattern combinations can be controlled by the control system of the present invention.

If one specific aspect is not needed for a brake system configuration, the respective element of the vector $\underline{\alpha}$ can be set to zero. Then, its distribution vector will not be included in the sums according to equation 6. Also if an axle is not present on the vehicle or is above the ground (e.g. lifted tag axle), its position has to be set zero in all distribution vectors. The sum of the elements of $\underline{d}$ must still be equal to one.

$$\underline{F} = F_v \cdot \left( \begin{bmatrix} d_{11} & \cdots & d_{A1} \\ d_{12} & \cdots & d_{A2} \\ \vdots & \ddots & \vdots \\ d_{1N} & \cdots & d_{AN} \end{bmatrix} \cdot \begin{bmatrix} a_1 \\ a_2 \\ \vdots \\ a_A \end{bmatrix} \right) = F_v \cdot \begin{bmatrix} d_{11}a_1 + d_{21}a_2 + \cdots + d_{A1}a_A \\ d_{12}a_1 + d_{22}a_2 + \cdots + d_{A2}a_A \\ \vdots \\ d_{1N}a_1 + d_{2N}a_2 + \cdots + d_{AN}a_A \end{bmatrix} \tag{6}$$

$$a_2 = 0; d_{i2} = 0; i = 1..A$$

If one or more brake patterns are not to be applied to certain axles, but are still needed for other axles, switching off the brake pattern or the axle as above is not possible. Instead, the distribution elements of the suspended axle must be set to the average of the elements for actively controlled axles. This results in neutral weight items while, other elements are below or above these average values. This method requires at least two active axles per brake pattern. If only one axle is to be controlled, all distribution elements are to be set to the same value. Hence, it is even better to disregard the respective brake pattern to avoid distortion of the sum towards a more balanced distribution.

If wheels of different axles should be controlled together, the brake force proportion must be also set to the same value for them.

To consider all input signals of such wheel groups their mean value is used for all members.

If in a very special case when an axle is inactive (e.g. because it is lifted) among a group of axles, respective signals of these axles are not be processed, the mean value of the remaining group members is to be used.

Furthermore, in a preferred embodiment, large deviations between the brake forces of individual axles have to be avoided due to safety and stability reasons.

Hence, the individual pattern weights in the calculated final brake force weight vector $(w_1, w_2)$ can be constrained, i.e. their minimum value can be pre-set. Hence, the maximal ratio of brake forces $(F_v)$ of individual axles is also constrained.

A vector of limited weights $\underline{w}^*$ can be calculated from the actual minimum weight $w_m$ and weight limit $w_l$.

$$\underline{w}^* = \underline{w_l} + C(\underline{w} - \underline{w_m}) \tag{7a}$$

$$\underline{w_m} = \begin{bmatrix} w_m \\ \vdots \\ w_m \end{bmatrix}_{N \times 1} ; \quad \underline{w_l} = \begin{bmatrix} w_l \\ \vdots \\ w_l \end{bmatrix}_{N \times 1} \tag{7b}$$

The constant C is unknown, but as there is still the requirement that the sum of elements $w_m$ must be one also after the limitation, it can be determined. A recalculation is only necessary if at least one element is below the limit.

$$\sum_{i=1}^{N} w_i^* = \sum_{i=1}^{N} \left( w_l + C(w_i - w_m) \right) \tag{8a}$$

$$N \cdot w_l + C(1 - N \cdot w_m) = 1 \tag{8b}$$

$$C = \frac{1 - N \cdot w_l}{1 - N \cdot w_m}; \ 0 < w_l \leq \frac{1}{N} \tag{8c}$$

In the equation 8c, if all pattern weights are equal, the denominator will be zero because $w_m = 1/N$. Therefore, the limit must always be set below the value 1/N:

Maximum ratio of brake forces is reached when of $N$ axles $N$ - 1 is weighted at the minimum. The remaining axle completes the sum to one. It is a good strategy to define a maximum force ratio between the axles and set the minimum ratio not to exceed it. This will give a lower limit of the brake force proportion as

$$r_{max} = \frac{1 - (N - 1) \cdot w_l}{w_l} = 1 - N + \frac{1}{w_l} \tag{9}$$

$$\lim_{w_l \to \frac{1}{N}} r_{max} = 1 \tag{9a}$$

$$\lim_{w_l \to 0} r_{max} = \infty \tag{9b}$$

$$w_l = \frac{1}{r_{max} + N - 1} \tag{9c}$$

For the usual maximum ratio value of 3.5, the limits for different axle numbers are presented in Table 2. Looking at the minimum values it is apparent that with this method axles are always braked, and no situation can occur that axles will not distribute any braking force.

(Table 2)

| N | $w_{l350}$ |
|---|---|
| 2 | 0.22 |
| 3 | 0.18 |
| 4 | 0.15 |
| 5 | 0.13 |

The present application discloses a brake force distribution method, defining considering multiple patterns depending on the actual status of the vehicle and its environment. Indicators like disk temperature, wheel slip, pad wear, axle load and additional driveline torque can be considered together with a smooth transition between the states with the method for brake force distribution according to the present application.

REFERENCE SIGN LIST

1    brake control device
N    total number of axles
n    axle index
$d_i$    brake pattern
$a_i$    total brake force

Claims

1.   Method for controlling a brake force distribution of a vehicle comprising at least two axles (N), wherein the total

brake force ($F_v$) to be applied in order to reach a certain retardation of the vehicle is distributed to the axles (n) of the vehicle, the method **characterised in that** it comprises the following steps:

> a) defining one or more brake patterns ($d_1$, $d_2$), wherein the brake patterns ($d_1$, $d_2$) are vectors with an entry for each axle (n);
> b) calculation of one pattern weight ($a_1$, $a_2$) for each brake pattern ($d_1$, $d_2$) based on at least one input value (Input 1),
> c) calculation of a weight distribution for the brake force ($F_n$) of each axle (n);
> d) calculation of a brake force ($F_N$) for each axle (n).

2. Method according to claim 1, wherein the one or more brake patterns ($d_1$, $d_2$) describe states of the vehicle and its environment.

3. Method according to claim 1 or 2, wherein the method considers all brake patterns ($d_1$, $d_2$) according to their respective pattern weight ($a_1$, $a_2$).

4. Method according to one of the previous claims, wherein a hierarchical order between the at least two brake patterns ($d_1$, $d_2$) is set for calculating the pattern weight ($a_1$, $a_2$), whereby at least one of the brake patterns ($d_1$, $d_2$) can be prioritized.

5. Method according to claim 4, wherein a prioritization can be performed based on a situation analysis of the brake system.

6. Method according to one of the previous claims, wherein the pattern weight ($a_1$, $a_2$) is calculated based on vehicle sensor data.

7. Method according to one of the previous claims, wherein the minimum percentage of the total brake force can be set depending on the actual number of controlled axles.

8. Method according to one of the previous claims, wherein at least one brake pattern can be disregarded, in particular by setting its respective pattern weight ($a_1$, $a_2$) to zero.

9. Method according to one of the previous claims, wherein at least one axle (n) can be permanently or temporarily disregarded, in particular by setting the entry / entries for the respective axle(s) in the at least two brake patterns ($d_1$, $d_2$) to the average of all remaining axles.

10. Method according to claim 9, wherein the input for calculation of the corresponding pattern for the disregarded axle(s) lies outside a predefined range around the average of all other non-excluded values.

11. Method according to one of the previous claims, wherein it can be set that the brake force of at least two axles ($F_1$, $F_2$) are identical if the brakes of said axles are commonly controlled, in particular if they are connected to the same pressure channel in a pneumatic brake system.

12. Method according to claim 11, wherein the mean value of the calculated brake forces of the at least two axles ($F_1$, $F_2$) are used.

13. Method according to claim 11 or 12, wherein, if at least one axle is inactive, in particular lifted, among a group of axles, the mean value of the remaining axles is set for the at least one inactive axle.

14. Brake control device adapted to perform the method according to one of claims 1 to 13.

15. Computer program adapted to perform the method according to one of claims 1 to 13.


**Patentansprüche**

1. Verfahren zur Steuerung einer Bremskraftverteilung eines Fahrzeugs, das mindestens zwei Achsen (N) umfasst, wobei die Gesamtbremskraft (Fv), die aufgebracht werden soll, um eine gewisse Verzögerung des Fahrzeugs zu erreichen, auf die Achsen (n) des Fahrzeugs verteilt wird,
wobei das Verfahren **dadurch gekennzeichnet ist, dass** es die folgenden Schritte umfasst:

a) Definieren eines oder mehrerer Bremsmuster ($d_1$, $d_2$), wobei die Bremsmuster ($d_1$, $d_2$) Vektoren mit einem Eintrag für jede Achse (n) sind;
b) Berechnung eines Mustergewichts ($a_1$, $a_2$) für jedes Bremsmuster ($d_1$, $d_2$) auf der Grundlage von mindestens einem Eingangswert (Eingabe 1),
c) Berechnung einer Gewichtsverteilung für die Bremskraft ($F_n$) einer jeden Achse (n);
d) Berechnung einer Bremskraft ($F_N$) für jede Achse (n).

2. Verfahren nach Anspruch 1, wobei das eine oder die mehreren Bremsmuster ($d_1$, $d_2$) Zustände des Fahrzeugs und seiner Umgebung beschreiben.

3. Verfahren nach Anspruch 1 oder 2, wobei das Verfahren alle Bremsmuster ($d_1$, $d_2$) entsprechend ihrem jeweiligen Mustergewicht ($a_1$, $a_2$) berücksichtigt.

4. Verfahren nach einem der vorhergehenden Ansprüche, wobei zur Berechnung des Mustergewichts ($a_1$, $a_2$) eine hierarchische Reihenfolge zwischen den mindestens zwei Bremsmustern ($d_1$, $d_2$) eingestellt wird, wodurch mindestens eines der Bremsmuster ($d_1$, $d_2$) priorisiert werden kann.

5. Verfahren nach Anspruch 4, wobei eine Priorisierung auf der Grundlage einer Situationsanalyse des Bremssystems durchgeführt werden kann.

6. Verfahren nach einem der vorhergehenden Ansprüche, wobei das Mustergewicht ($a_1$, $a_2$) auf der Grundlage von Fahrzeugsensordaten berechnet wird.

7. Verfahren nach einem der vorhergehenden Ansprüche, wobei der Mindestprozentsatz der Gesamtbremskraft in Abhängigkeit von der tatsächlichen Anzahl der geregelten Achsen eingestellt werden kann.

8. Verfahren nach einem der vorhergehenden Ansprüche, wobei mindestens ein Bremsmuster vernachlässigt werden kann, insbesondere indem sein jeweiliges Mustergewicht ($a_1$, $a_2$) auf null gesetzt wird.

9. Verfahren nach einem der vorhergehenden Ansprüche, wobei mindestens eine Achse (n) dauerhaft oder temporär vernachlässigt werden kann, insbesondere indem der Eintrag bzw. die Einträge für die jeweilige(n) Achse(n) in den mindestens zwei Bremsmustern ($d_1$, $d_2$) auf den Mittelwert aller übrigen Achsen eingestellt wird.

10. Verfahren nach Anspruch 9, wobei die Eingabe zur Berechnung des entsprechenden Musters für die nicht berücksichtigte(n) Achse(n) außerhalb eines vordefinierten Bereichs um den Mittelwert aller anderen nicht ausgeschlossenen Werte liegt.

11. Verfahren nach einem der vorhergehenden Ansprüche, wobei eingestellt werden kann, dass die Bremskraft von mindestens zwei Achsen ($F_1$, $F_2$) identisch ist, wenn die Bremsen dieser Achsen gemeinsam geregelt werden, insbesondere wenn sie an denselben Druckkanal in einem pneumatischen Bremssystem angeschlossen sind.

12. Verfahren nach Anspruch 11, wobei der Mittelwert der berechneten Bremskräfte der mindestens zwei Achsen ($F_1$, $F_2$) verwendet wird.

13. Verfahren nach Anspruch 11 oder 12, wobei, wenn von einer Gruppe von Achsen mindestens eine Achse inaktiv, insbesondere angehoben, ist, der Mittelwert der übrigen Achsen für die mindestens eine inaktive Achse eingestellt wird.

14. Bremssteuerungsvorrichtung, die zur Durchführung des Verfahrens nach einem der Ansprüche 1 bis 13 eingerichtet ist.

15. Computerprogramm, das zur Durchführung des Verfahrens nach einem der Ansprüche 1 bis 13 eingerichtet ist.

**Revendications**

1.  Procédé pour commander une répartition de force de freinage d'un véhicule comportant au moins deux essieux (N), dans lequel la force ($F_v$) de freinage totale à appliquer afin d'atteindre un certain retardement du véhicule est répartie aux essieux (n) du véhicule, le procédé étant **caractérisé en ce qu'**il comporte les étapes suivantes :

    a) on définit une ou plusieurs configurations ($d_1$, $d_2$) de freinage, les configurations ($d_1$, $d_2$) de freinage étant des vecteurs avec une entrée pour chaque essieu (n) ;
    b) on calcule un poids ($a_1$, $a_2$) de configuration pour chaque configuration ($d_1$, $d_2$) de freinage sur la base d'au moins une valeur (Input 1) d'entrée,
    c) on calcule une répartition de poids pour la force ($F_N$) de freinage de chaque essieu (n) ;
    d) on calcule une force ($F_N$) de freinage pour chaque essieu (n) .

2.  Procédé suivant la revendication 1, dans lequel la une ou plusieurs configurations ($d_1$, $d_2$) de freinage décrit ou décrivent des états du véhicule et de son environnement.

3.  Procédé suivant la revendication 1 ou 2, dans lequel le procédé prend en considération toutes les configurations ($d_1$, $d_2$) de freinage conformément à leur poids ($a_1$, $a_2$) de configuration respectif.

4.  Procédé suivant l'une des revendications précédentes, dans lequel un ordre hiérarchique entre les au moins deux configurations ($d_1$, $d_2$) de freinage est réglé pour calculer le poids ($a_1$, $a_2$) de configuration, grâce à quoi il peut être donné priorité à au moins l'une des configurations ($d_1$, $d_2$) de freinage.

5.  Procédé suivant la revendication 4, dans lequel une mise en priorité peut être effectuée sur la base d'une analyse de situation du système de freinage.

6.  Procédé suivant l'une des revendications précédentes, dans lequel le poids ($a_1$, $a_2$) de configuration est calculé sur la base de données de capteur de véhicule.

7.  Procédé suivant l'une des revendications précédentes, dans lequel le pourcentage minimum de la force de freinage totale peut être réglé en fonction du nombre en cours d'essieux commandés.

8.  Procédé suivant l'une des revendications précédentes, dans lequel au moins une configuration de freinage peut être mise de côté, notamment en réglant son poids ($a_1$, $a_2$) de configuration respectif à zéro.

9.  Procédé suivant l'une des revendications précédentes, dans lequel au moins un essieu (n) peut être mis de côté temporairement ou de manière permanente, notamment en réglant l'entrée ou les entrées pour l'essieu ou les essieux respectifs dans les au moins deux configurations ($d_1$, $d_2$) de freinage à la moyenne de tous les essieux restants.

10. Procédé suivant la revendication 9, dans lequel l'entrée pour le calcul de la configuration correspondante pour les essieux mis de côté se trouve à l'extérieur d'un domaine défini à l'avance autour de la moyenne de toutes les autres valeurs non exclues.

11. Procédé suivant l'une des revendications précédentes, dans lequel il peut être réglé que les forces de freinage de au moins deux essieux ($F_1$, $F_2$) sont identiques si les freins des essieux sont commandés en commun, notamment s'ils sont connectés au même canal de pression dans un système de freinage pneumatique.

12. Procédé suivant la revendication 11, dans lequel les valeurs moyennes des forces de freinage calculées des au moins deux essieux ($F_1$, $F_2$) sont utilisées.

13. Procédé suivant la revendication 11 ou 12, dans lequel, si au moins un essieu est inactif, notamment est soulevé, parmi un groupe d'essieux, la valeur moyenne des essieux restants est réglée pour le au moins un essieu inactif.

14. Dispositif de commande de freinage conçu pour mettre en œuvre le procédé suivant l'une des revendications 1 à 13.

15. Programme d'ordinateur conçu pour mettre en oeuvre le procédé suivant l'une des revendications 1 à 13.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018170330 A1

- JP 2012010505 B